# EUROPEAN PATENT APPLICATION

(11) **EP 2 243 612 A1**
(43) Date of publication of application: **27.10.2010**
(21) Application number: 10160692.9
(22) Date of filing: 22.04.2010
(51) Int. Cl.: B29C 45/16, B29C 44/14, B65D 65/46

(54) **Method for providing biodegradable food trays and corresponding biodegradable food tray**

(30) Priority: 24.04.2009 IT MO20090097
(71) Applicant: Santanche, Giuseppe, 04735-002 San Paolo (BR); Anceschi, Aimone, 42011 Bagnolo in Piano (RE) (IT)
(72) Inventor: Santanche, Giuseppe, 04735-002 San Paolo (BR); Anceschi, Aimone, 42011 Bagnolo in Piano (RE) (IT)
(74) Representative: Modiano, Micaela Nadia

(57) **Abstract**

A method for providing food trays, which comprises the step (100) of providing at least one expandable polymeric material such as polyurethane in the liquid state; providing (101) at least one mold (12) for forming at least one tray (1), which comprises a first mold part (13) and a second mold part (14), which can be opened and form, by moving closer together, at least one expansion and forming chamber for the polyurethane; depositing (102) at least one layer of polyurethane in the liquid state onto at least one of the first and second mold parts (13, 14); heating (104) the mold (12) for simultaneous polymerization and expansion of the layer; the method comprising the steps of providing (105) at least one substantially impermeable film (5); positioning (106), upstream at least with respect to the step (103) of closing the mold (12), the film (5) on the layer so that it is interposed between the layer and at least one of the first or second mold parts (13, 14), the layer and the film (5) being made of respective biodegradable materials.

## Description

The present invention relates to a method for providing biodegradable food trays and to a corresponding biodegradable food tray.

Food trays are known which have a substantially concave shape to accommodate food products, for example for retail, and are made mainly of an expanded polymeric material, such as for example polystyrene or Styrofoam.

The steps of the method for producing these trays are basically as follows: a first step, in which a flat sheet of appropriate thickness, for example 2-3 mm, is cut and then laid on molds and heated with steam; then, by thermoforming, the tray-like shape is created which, by cooling, then becomes rigid due to the polymerization and expansion of the layer of polystyrene that will form the supporting structure of the tray.

In any case, these known types of trays are not free from drawbacks, which include the fact that they are used mainly for disposable use and, being made of polystyrene, that is, a synthetic polymeric material, have considerable disposal times, for example due to their low biodegradability.

It is calculated that the biodegradation time of an expanded polystyrene tray is in the order of several decades.

The aim of the present invention is to eliminate the drawbacks noted above of the background art, by providing a food tray and a method for providing it that allow short times for the disposal of said tray and therefore has a low environmental impact, is environment-friendly and respects environmental conditions.

Within this aim, an object of the present invention is to ensure that the tray according to the invention, in addition to being environment-friendly, is at the same time safe to use, complying with hygienic and sanitary conditions for food use.

Another object of the invention is to improve the process steps for providing a tray according to the invention that optimizes production times and at the same time ensures optimum production efficiencies.

Another object of the present invention is to provide a method and a tray that are simple, relatively easy to provide in practice, safe to use, effective in operation and relatively low in cost.

This aim and these and other objects which will become better apparent hereinafter are achieved by the present method for producing food trays, which comprises the step of providing at least one expandable polymeric material in the liquid state; providing at least one mold for forming at least one tray, which comprises a first mold part and a second mold part, which can be opened and form, by moving closer together, at least one expansion and forming chamber for said expandable polymeric material; depositing at least one layer of said material in the liquid state onto at least one of said first and second mold parts; closing said mold, said layer being interposed between said first mold part and said second mold part; heating said mold for simultaneous polymerization and expansion of said layer; extracting said formed tray from said mold; **characterized in that** it comprises the step of providing at least one substantially impermeable film; positioning, upstream at least with respect to said step of closing said mold, said film on said layer so that it is interposed between said layer and at least one of said first and second mold parts, said layer and said film being made of respective biodegradable materials; and in that it comprises the adhesion of said film to said layer during the expansion of said layer.

Advantageously the above aim and objects are also achieved by a food tray that comprises at least one container for accommodating food products and the like, said container being made of at least one expanded polymeric material, **characterized in that** it comprises at least one film that adheres at least to the region of said container that is designed to contain said products, and in that said container and said film are made of respective biodegradable materials.

Further characteristics and advantages of the present invention will become better apparent from the following detailed description of a preferred but not exclusive embodiment of an apparatus for producing food trays that employs the method according to the invention and of a corresponding tray, illustrated by way of non-limiting example in the accompanying drawings, wherein:
Figure 1 is a top plan view of a tray according to the invention;
Figure 2 is a front elevation view of Figure 1;
Figure 3 is a side elevation view of Figure 1;
Figure 4a is a schematic side elevation view of the head portion of an apparatus according to the invention;
Figure 4b is a schematic side elevation view of the tail portion of the apparatus of Figure 4a;
Figure 5 is a sectional view of the apparatus according to the invention, taken along the sectional line I-I of Figure 4a;
Figure 6 is a view of a detail of Figure 4b;

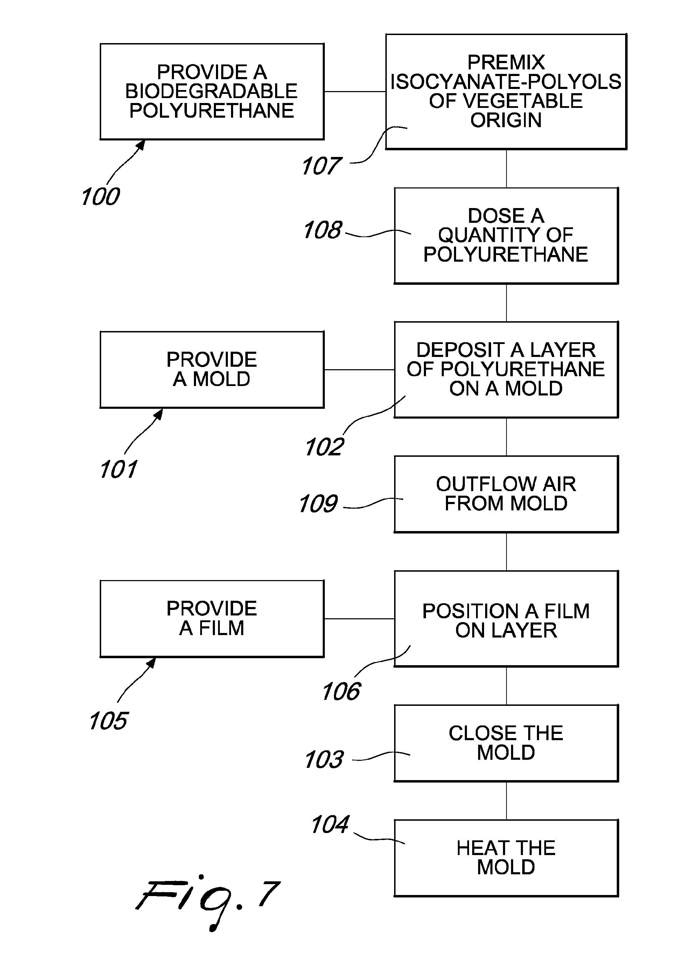

Figure 7 is a flowchart of the method according to the invention.

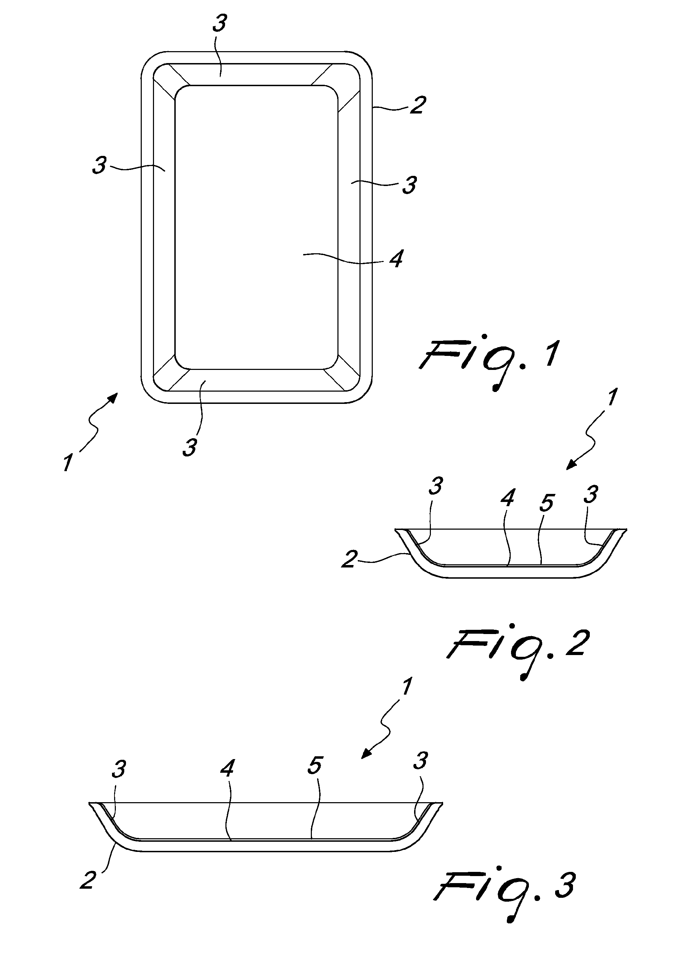

With particular reference to Figures 1-3, the reference numeral 1 generally designates a food tray.

The tray 1 comprises at least one container 2 for accommodating food products and the like, which in the illustrated example has a substantially quadrangular concave shape and is provided with perimetric walls 3 that protrude above the bottom 4 which forms the resting contact surface for the food products; however, different and equivalent embodiments of the tray 1 are not excluded.

The container 2 is made of at least one expanded polymeric material.

Particularly, for the purposes of the present invention, the tray 1 comprises at least one film 5 that adheres at least to the region of the container 2 designed to contain the food products.

In particular, the film 5 covers the bottom 4 and the region of the walls 3 inside such container.

Moreover, the container 2 and the film 5 are made of respective biodegradable materials.

The expanded polymeric material of which the container 2 is made is polyurethane derived from the mixing of isocyanate and polyol of vegetable origin. Advantageously, the polyols of vegetable origin are derived from corn.

In particular, the polyurethane is easily biodegradable, environment-friendly and non-toxic, and therefore the tray 1 has a low environmental impact or even none at all.

Particularly, the film 5 is provided by means of biopolymers that use vegetable components which are also derived from corn, and therefore it is also biodegradable, environment-friendly and non-toxic as well as substantially impermeable.

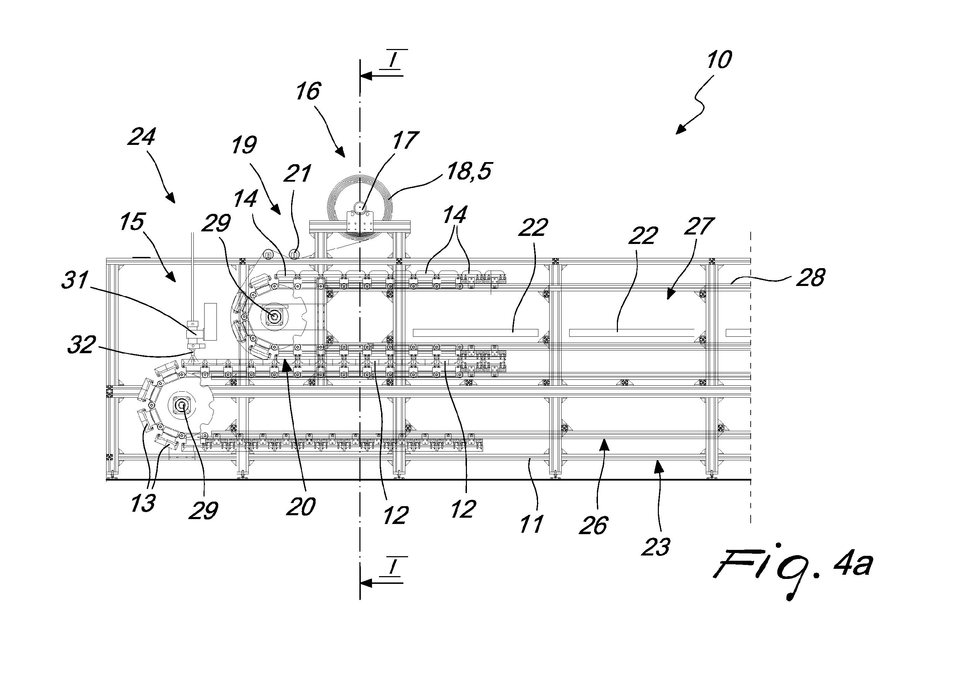

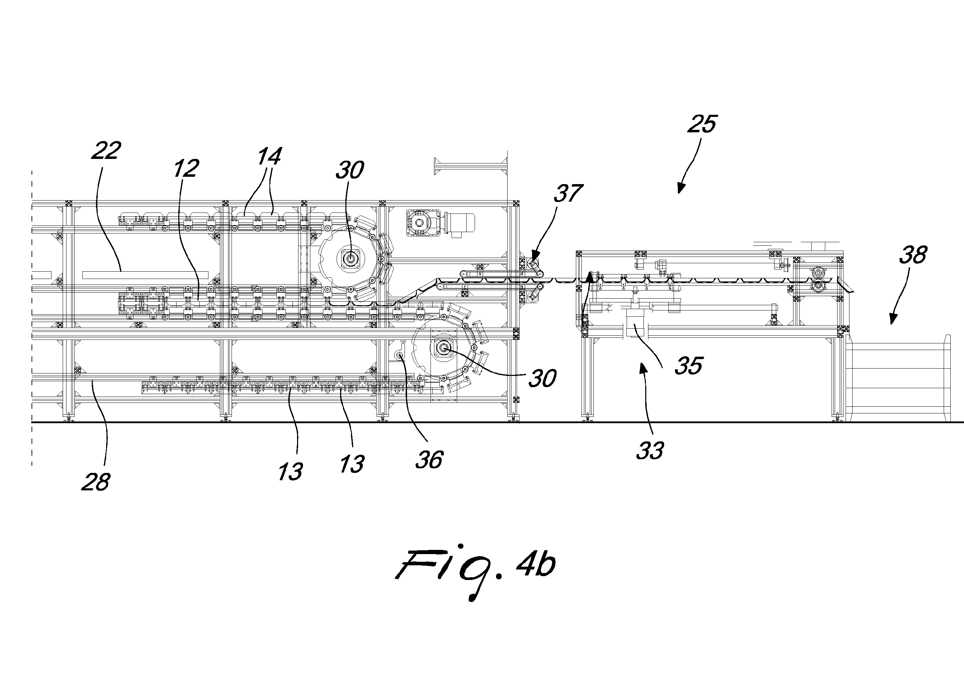

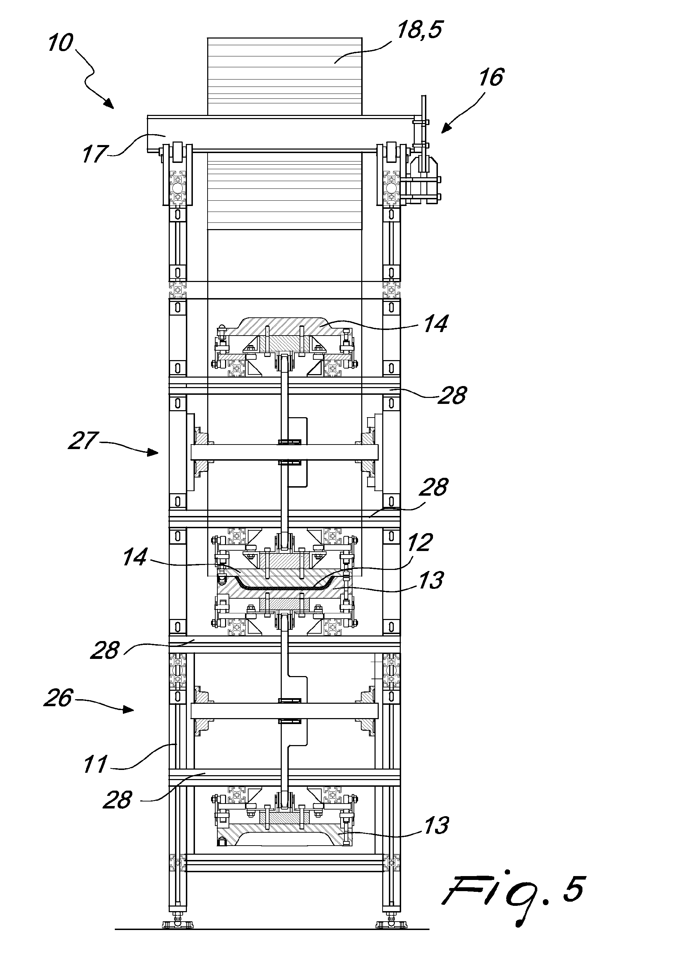

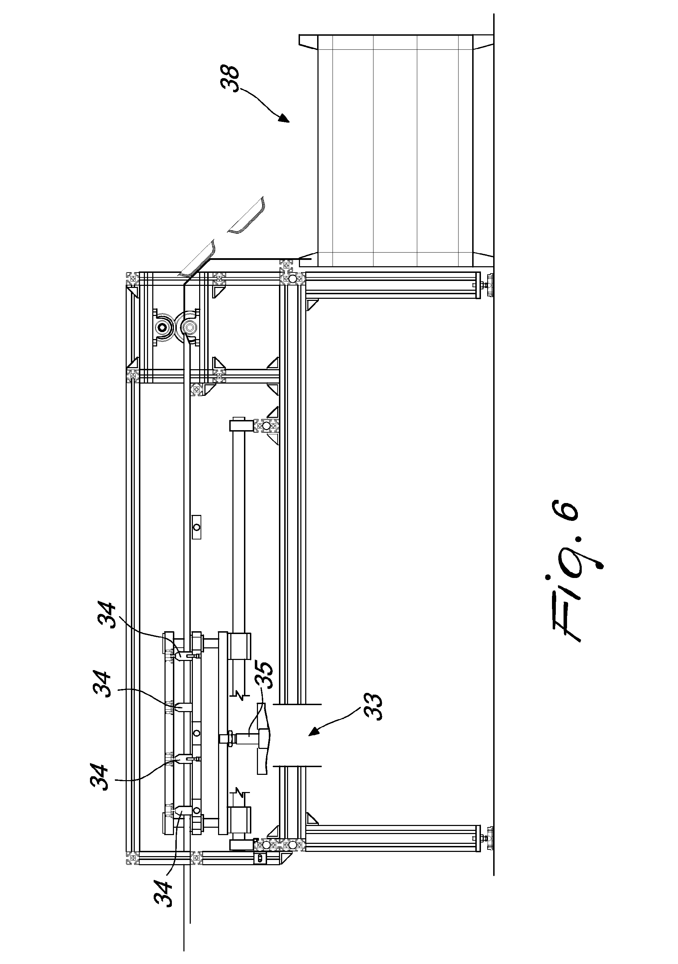

The tray 1 is preferably provided by means of an apparatus which, with particular reference to Figures 4-6, has been designated generally by the reference numeral 10.

The apparatus 10 comprises at least one supporting structure 11, of the type of a frame provided with conventional ground resting contact elements, of at least one mold 12 for forming at least one tray 1 which comprises a first mold part 13 and a second mold part 14, which can be opened and are for example complementary.

In particular, the first mold part 13 is substantially concave and the second mold part 14 is substantially convex to form the concavity of the tray for containing the food products.

Further, the apparatus 10 comprises means 15 for mixing and dispensing at least one layer of expandable polymeric material in the liquid state on the first mold part 13, which are associated with the supporting structure 11.

In particular, the apparatus 1 comprises means 16 for arranging at least one impermeable film 5 on the layer, which is still in the liquid state, for adhesion of such film thereon once the mold 12 has been closed and once the expandable polymeric material has been polymerized and expanded.

The arrangement means 16 comprise in particular at least one roller support 17 for the continuous unwinding of a reel 18 of film 5.

The apparatus 10 further comprises means 19 for the tightening and adhesion of the film 5 to at least one of the first and second mold parts, respectively 13 and 14.

In particular, the tightening and adhesion means 19 comprise means 20 for the adhesion of the unrolled free end of the film 5, which are arranged proximately to the second mold part 14 and retain the film so that it adheres to the convex surface of the second mold part and rollers 21 for tightening the film 5 which are interposed between the roller support and such adhesion means, as well as means for calibrated braking which are associated with the roller support, for tightening the film 5 and making it adhere to the convex surface of the second mold part 14.

The apparatus 10 further comprises means for the outflow of the residual air within the mold 12 for evacuating the air inside such mold.

In particular, the outflow means are associated with the second mold part 14 and comprise holes provided on the surface of the second mold part 14; the outflow of the air occurs through channels, not shown in the figures, which are provided in such second mold part.

The holes have a diameter preferably comprised between 1.5 mm and 3 mm.

Advantageously, the outflow means are such as to ensure removal of the residual air inside the mold 12 once such mold has been closed and at the same time to ensure the adhesion of the film 5 to the second mold part 14 when the mold 12 is open and during its closure.

The apparatus 10 comprises means 22 for heating the mold 12 for the polymerization and expansion of the layer of expandable polymeric material and the simultaneous adhesion of the film 5 to the polymerized and expanded layer to substantially provide a body that is monolithic therewith.

The heating means 22 comprise, for example, radiating plates which are associated with the supporting structure and are arranged above or below the closed mold 12.

The apparatus 10 comprises a plurality of molds 12, which are associated with means 23 for their movement, from at least one region 24 for introducing the expandable polymeric material to a region 25 for expulsion of a formed tray 1, for a substantially continuous production of trays 1.

The movement means 23 comprise at least one first conveyor 26 with flat mold supporting plates, the plates of such first conveyor being surmounted by the first mold parts 13, and at least one second conveyor 27 with flat mold supporting plates, the flat plates of such second conveyor constituting the flat footing surmounted by the second mold parts 14.

The first and second conveyors, respectively 26 and 27, each comprise, as is known, a respective flexible element 28, which is closed on itself in a loop and is wound around the at least one respective driven roller 29 and at least one respective motorized roller 30, which are supported by the supporting structure 11 so that they can rotate about their respective longitudinal axes.

In particular, the second conveyor 27 is arranged above the first conveyor 26 so that each second mold part 14 is matched by at least one first mold part 13 which can be associated therewith to form a mold 12 during conveyance from the entry region 24 to the expulsion region 25.

The radiating plates are arranged along the central portion of the movement means 23, in which the mold 12 is closed, and the length of the portion that is affected depends on the polymerization and expansion time of the polyurethane of vegetable origin; in particular, the apparatus 10 is dimensioned so that the time required for the polymerization and expansion of each layer of polyurethane is at least substantially equal to 4 minutes.

The mixing and dispensing means 15 comprise a supply circuit and a mixing head 31; the two fluids are drawn from separate tanks, preheated, always kept recirculating and mixed in the mixing head 31 provided with a mixing chamber and injected through a dispensing nozzle 32, which in particular is arranged in the entry region 24 above the first conveyor 26 and thus above the first mold parts 13 in transit to deposit the layer of mixed expandable polymeric material on such first mold part.

Moreover, the apparatus 10 comprises means 33 for cutting at least the outgoing machining flash and the film 5 that protrudes from the mold 12 to separate the various trays 1.

The cutting means 33 comprise at least one cutting blade 34, which is rendered movable by means of an actuator 35 which moves it from an active configuration for interference with the advancement plane of the trays 1, for cutting the joint between one tray 1 and the next, from the entry region 24 to the expulsion region 25, to an inactive configuration, in which it does not interfere with the advancement plane.

The apparatus 10 further comprises means for extracting the tray 1 that has been formed once the mold 12 has been reopened, such means being associated with the supporting structure 11 in the expulsion region 26.

In particular, the extraction means comprise at least one blower 36 for blowing air below the first mold part 13 upward and for lifting the tray 1 contained therein and means 37 for gripping the tray, raised for removal from the second mold part 14 and arrangement in a storage area 38.

The cutting means 33 are associated with the supporting structure 11 and are arranged downstream of the expulsion region 25 ahead of the storage area 38.

The method for providing food trays 1 is as follows and comprises a step 100 of providing at least one expandable polymeric material in the liquid state and a step 101 of providing the mold 12 for forming the tray 1 which comprises the first mold part 13 and the second mold part 14 which can be opened and form, by moving closer together, at least one expansion and forming chamber for the expandable polymeric material.

Moreover, the method comprises a step 102 of depositing at least one layer of expandable polymeric material in the liquid state on at least one of the first mold part and the second mold part, respectively 13 and 14, and a step 103 of closing the mold 12, with the layer interposed between such first and second mold parts.

The method according to the invention further comprises a step 104 of heating the forming mold 12 for simultaneous polymerization and expansion of the layer and for extraction of the formed tray 1 from the mold 12.

Advantageously, the adhesion of the film 5 to the layer occurs during the expansion of such layer.

In particular, for the purposes of the present invention, the method comprises a step 105 of providing at least one substantially impermeable film 5 and a step 106 of positioning, upstream at least with respect to the step 103 of closing the mold 12, the film 5 on the layer, such film being interposed between such layer and at least one of the first or second mold parts, respectively 13 or 14; as mentioned, such layer and such film are made of respective biodegradable materials.

As described above, the expandable polymeric material is polyurethane, the step 100 of providing such expandable material comprises a step 107 of premixing isocyanate and polyols of vegetable origin to form in situ the polyurethane of vegetable origin, which is therefore highly biodegradable.

The deposition step 102 advantageously comprises a step 108 of dosing a quantity comprised between 1 and 5 grams of polyurethane in the liquid state to provide a tray 1 or comparable quantities for providing trays of various sizes and formats.

Moreover, the positioning step 106 comprises the arrangement of the film 5 so that it substantially follows the profile of at least one of the first or second mold parts, respectively 13 or 14, so that at least one end portion of the film is kept interposed between such first and second mold parts so as to be retained in position jointly with the mold 12.

The method comprises, before and/or during the step 103 of closing the mold 12, a step 109 for the outflow of the residual air within the mold, to provide a region of the chamber inside such mold that is substantially devoid of air.

In practice it has been found that the described invention achieves the proposed aim and objects, and in particular the fact is stressed that the tray according to the invention allows short times for the disposal of such tray and therefore has a low environmental impact, is environment-friendly and respects environmental conditions. Further, the tray according to the invention, in addition to being environment-friendly, is at the same time safe to use and respects the hygienic and sanitary conditions for food use. Moreover, the present invention has a structure that is simple, relatively easy to provide in practice, safe to use, effective in operation and has relatively low costs.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

The disclosures in Italian Patent Application No. M02009A000097 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A food tray (1), comprising at least one container (2) for accommodating food products and the like, said container (2) being made of at least one expanded polymeric material, **characterized in that** it comprises at least one film (5) that adheres at least to the region of said container (2) that is designed to contain said products, and **in that** said container (2) and said film (5) are made of respective biodegradable materials.

2. The tray (1) according to claim 1, **characterized in that** said material is made of polyurethane derived from the mixing of isocyanate and polyol of vegetable origin.

3. The tray (1) according to claim 1 or 2, **characterized in that** said film is made of biopolymers of vegetable origin.

4. A method for providing food trays, comprising the steps of
- providing (100) at least one expandable polymeric material in the liquid state;
- providing (101) at least one mold (12) for forming at least one tray (1), which comprises a first mold part (13) and a second mold part (14), which can be opened and form, by moving closer together, at least one expansion and forming chamber for said expandable polymeric material;
- depositing (102) at least one layer of said expandable polymeric material in the liquid state onto at least one of said first and second mold parts (13, 14);
- closing (103) said mold (12), said layer being interposed between said first mold part (13) and said second mold part (14);
- heating (104) said mold (12) for simultaneous polymerization and expansion of said layer;
- extracting said tray (11) formed by said mold (12);
**characterized in that** it comprises the steps of:
- providing (105) at least one substantially impermeable film (5);
- positioning (106), upstream at least with respect to said step (103) of closing said mold (12), said film (5) on said layer so that it is interposed between said layer and at least one of said first or second mold parts (13, 14), said layer and said film (5) being made of respective biodegradable materials;
and **in that** it comprises the adhesion of said film to said layer during the expansion of said layer.

5. The method according to claim 4, **characterized in that** said expandable polymeric material is polyurethane and **in that** the step (100) for providing said expandable material comprises the step (107) of premixing isocyanate and polyols of vegetable origin in order to form said polyurethane on site.

6. The method according to claim 4 or 5, **characterized in that** said deposition step (102) comprises dosing (108) a quantity comprised between 1 and 5 g of said expandable material in the liquid state.

7. The method according to one or more of claims 4 to 6, **characterized in that** said positioning step (106) comprises arranging said film (5) that substantially duplicates the profile of at least one of said first or second mold parts (13, 14), at least one end portion of said film (5) being interposed between said first and second mold parts (13, 14) so as to be retained in position jointly with said mold (12).

8. The method according to one or more of claims 4 to 7, **characterized in that** it comprises the step (109) of the exit of the residual air within said mold (12), said chamber being substantially without air.

9. An apparatus (10) for producing food trays (1), comprising at least one supporting structure (11) for at least one mold (12) for forming at least one tray (1), which comprises a first mold part (13) and a second mold part (14) which can be opened and are complementary, means (15) for mixing and dispensing at least one layer of polymeric material that is expandable in the liquid state onto said first mold part (13), which are associated with said supporting structure (11), **characterized in that** it comprises means (16) for arranging at least one impermeable film (5) on said layer in the liquid state for the adhesion of said film thereon.

10. The apparatus (10) according to claim 9, **characterized in that** it comprises means (19) for the tightening and adhesion of said film (5) to at least one of said first and second mold parts (13, 14).

11. The apparatus (10) according to claim 9 or 10, **characterized in that** it comprises means for the exit of the residual air within said mold (12) substantially for the removal of the air within said mold.

12. The apparatus (10) according to one or more of claims 9 to 11, **characterized in that** it comprises means (22) for heating said mold (12) for the polymerization and expansion of said layer of expandable polymeric material and the adhesion of said film (5) to said polymerized and expanded layer.

13. The apparatus (10) according to one or more of claims 9 to 12, **characterized in that** it comprises a plurality of said molds (12), which are associated with means (23) for moving them, from at least one region (24) for introducing the expandable polymeric material to a region (25) for expelling a molded tray (1), to provide food trays (1) according to the steps of the production method according to one or more of claims 4 to 8, said method being continuous.

14. Use of biodegradable polyurethane of vegetable origin for the provision of food trays (1).
